Europäisches Patentamt

European Patent Office

Office européen des brevets

(19)

(11) **EP 0 621 965 B1**

(12)                **EUROPÄISCHE PATENTSCHRIFT**

(45) Veröffentlichungstag und Bekanntmachung des
Hinweises auf die Patenterteilung:
**03.04.1996 Patentblatt 1996/14**

(21) Anmeldenummer: **93902217.4**

(22) Anmeldetag: **15.01.1993**

(51) Int Cl.6: **G06F 1/03**

(86) Internationale Anmeldenummer:
**PCT/EP93/00093**

(87) Internationale Veröffentlichungsnummer:
**WO 93/14453 (22.07.1993 Gazette 1993/18)**

(54) **PC-GESTEUERTER DIRECT-DIGITAL-SYNTHESIZER**

PC-CONTROLLED DIRECT DIGITAL SYNTHESISER

SYNTHETISEUR NUMERIQUE DIRECT COMMANDE PAR UN PC

(84) Benannte Vertragsstaaten:
**CH DE FR GB LI**

(30) Priorität: **17.01.1992 DE 4201157**

(43) Veröffentlichungstag der Anmeldung:
**02.11.1994 Patentblatt 1994/44**

(73) Patentinhaber: **Max-Planck-Gesellschaft zur
Förderung der Wissenschaften e.V. Berlin
D-80539 München (DE)**

(72) Erfinder:
• **FUNCK, Theodor
D-3400 Göttingen (DE)**
• **BUCKIN, Vitali
D-3400 Göttingen (DE)**

(74) Vertreter: **von Bezold, Dieter, Dr. et al
Dr. Dieter von Bezold
Dipl.-Ing. Peter Schütz
Dipl.-Ing. Wolfgang Heusler
Brienner Strasse 52
D-80333 München (DE)**

(56) Entgegenhaltungen:
**GB-A- 2 078 455**

• **EDN ELECTRICAL DESIGN NEWS. Bd. 34, Nr.
23, 9. November 1989, NEWTON,
MASSACHUSETTS US Seiten 95 - 104 ,
XP000072970 GALLANT 'Devices refine the art
of frequency synthesis'**
• **JOURNAL OF THE ACOUSTICAL SOCIETY OF
AMERICA Bd. 79, Nr. 2, Februar 1986, NEW
YORK US Seiten 572 - 574 HOLLAND ET AL 'A
high-speed digital arbitrary waveform
generator'**

**Beschreibung**

Die Erfindung betrifft ein Verfahren zum Betrieb eines Direct-Digital-Synthesizers oder digitalen Funktionsgenerators, der einen oder mehrere Kanäle (A, B, ...) mit jeweils einem Phaseninkrementregister enthält und von einer Rechenanlage angesteuert werden kann, indem die Rechenanlage Informationsbits an den DDS sendet.

Bei Funktionsgeneratoren und Synthesizern ist die Anwendung von digitalen Signalquellen, insbesondere Direct-Digital-Synthesizern (DDS) bekannt, bei denen aus einer vorgegebenen festen Taktfrequenz Signale niedrigerer Frequenzen erzeugt werden (für eine zusammenfassende Darstellung s. hierzu z.B. EDN Electrical Design News, Bd. 34, Nr. 23, 9. November 1989, Newton, Massachusetts, US, Seiten 94-104). Dabei werden ausgewählte Werte einer eingespeicherten digitalisierten periodischen Funktion einem Digital-Analog-Wandler und einem nachgeschalteten Tiefpaßfilter zur Erzeugung einer gewünschten Analogfrequenz zugeführt. Die Auswahl der im Speicher vorhandenen Werte erfolgt durch einen sogenannten Phasenakkumulator, dem ein Phaseninkrement zugeführt wird. Dieses Phaseninkrement ist der Phasenabstand der aus dem Speicher auszuwählenden Werte, die dem Phasenakkumulator mit der Taktrate zugeführt werden. Die Größe des Phaseninkrements ist bestimmt einerseits durch die Taktfrequenz, mit der die Akkumulation erfolgt und andererseits durch die Form und Frequenz des zu erzeugenden Ausgangssignals. Für eine kontinuierliche Änderung der Frequenz oder Phase sind umfangreiche Rechenvorgänge notwendig, um die erforderlichen Phaseninkremente laufend zu bestimmen. Diese müssen dann kontinuierlich mit der der Änderung entsprechenden Geschwindigkeit in die Register des Phasenakkumulators geladen werden.

Die Anwendbarkeit digitaler Signalquellen hängt daher oft davon ab, ob eine Ansteuerung mit raschen kleinen Frequenzänderungen und mit quasi-kontinuierlichen Änderungen der Phase möglich ist. Im Prinzip bietet die Technik der Direct-Digital-Synthesizer solche Möglichkeiten, jedoch nur unter der Voraussetzung, daß die Ablaufsteuerung durch die ansteuernde Einrichtung beliebig fein abgestuft erfolgen kann und daß die Wechselwirkung mit dieser Einrichtung schnell möglich ist.

Bei der Anwendung der DDS-Technik wurden bis vor kurzem im Stand der Technik als kontrollierende und steuernde Einrichtung Mikroprozessoren eingesetzt, die dann entweder manuell über ein Tastenfeld oder über entsprechende Schnittstellen (z.B. HPIB) von anderen Rechnern bedient werden.

Dieses Konzept ist aus verschiedenen Gründen nachteilig. Einmal ist die in Maschinensprache oder auf Assembler-Ebene erforderliche Programmierung der Mikroprozessoren mühsam und daher nicht optimal fein abgestuft durchführbar, so daß die Vorteile der DDS-Technik (hohe Auflösung von Frequenz und Phase) nur unter großem Aufwand nutzbar sind. Auf der anderen Seite sind die bisher verwendeten Mikroprozessoren verhältnismäßig langsam, und die Bedienung des DDS wird durch die Schnittstelle zwischen Rechner (z.B. für Automatisierung) und Mikroprozessor zusätzlich kompliziert. Außerdem ist eine Einbindung in rechnergestützte Experimente und elektronische Datenerfassung nur schwierig zu realisieren. Daher wird seit kurzem im Stand der Technik ein Personal Computer (PC) zur direkten Ansteuerung eines DDS verwendet, wie beispielsweise beschrieben in Elektronik, Heft 9/1991, J. Ewert: " "Arbs": Welches Signal soll's" sein?", S. 63-70, W. Hascher: "Welche "Arbs" gibt es? ", S. 72-74.

Die verbesserte Ansteuerung des DDS durch den PC bringt jedoch die Vorteile der DDS-Technik noch nicht voll zum Tragen. Ein weiteres wesentliches Problem besteht nämlich darin, daß zur Erzeugung einer quasi-kontinuierlichen Schwingung laufend Phaseninkremente in ein Phaseninkrementregister geladen werden müssen, letzteres aber nur ein begrenztes Speicher-vermögen hat. Um einen Überlauf zu verhindern, müssen beim Stand der Technik zeitaufwendige Prüfoperationen zur Ermittlung des im Register noch zur Verfügung stehenden Platzes durchgeführt werden.

Es ist daher Aufgabe der vorliegenden Erfindung, ein Verfahren zur Ansteuerung eines DDS anzugeben, bei dem die Vorteile der DDS-Technik, wie hohe Auflösung von Frequenz und Phase voll zum Tragen kommen, so daß mit geringem Aufwand sowohl sehr kleine Frequenz- oder Phasenänderungen als auch insbesondere für die Durchführung von Frequenz - oder Phasen-Scanning, große Frequenz- oder Phasenänderungen quasi-kontinuierlich und schnell durchgeführt werden können.

Es ist ferner Aufgabe der vorliegenden Erfindung, ein Verfahren zur Ansteuerung eines DDS anzugeben, bei welchem Phaseninkremente mit geringem Aufwand kontinuierlich in ein Phaseninkrementregister geladen werden können, ohne daß zeitaufwendige Prüfoperationen zur Ermittlung des im Register noch zur Verfügung stehenden Platzes durchgeführt werden müssen.

Diese Aufgabe wird mit dem Verfahren gemäß dem Patentanspruch 1 sowie mit der Einrichtung gemäß dem Patentanspruch 5 gelöst.

Der mit dem erfindungsgemäßen Verfahren erzielte Vorteil besteht insbesondere darin, daß die Phaseninkrementregister durch die Verwendung der angegebenen Verfahrensschritte kontinuierlich mit Phaseninkrementen beladen werden können, wobei ein Überlauf der Register automatisch vermieden wird. Auf zeitaufwendige Prüfoperationen zur Ermittlung des in den Registern noch zur Verfügung stehenden Platzes kann daher verzichtet werden. Die Möglichkeiten der DDS-Technik wie hohe Genauigkeit und Auflösung der Frequenz und der Phase, phasenkontinuierliche Ansteuerung von Frequenzänderungen, laufende exakte Kontrolle der Phase, beliebige Sprünge von Frequenz und Phase sowie schnelles Hin- und Herschalten zwischen mehreren unterschiedlichen Frequenzen können somit besser genutzt werden. Weiterhin kann der DDS 1 besser durch ein auf einer Rechenanlage ablaufendes automatisches Meßprogramm angesteuert werden.

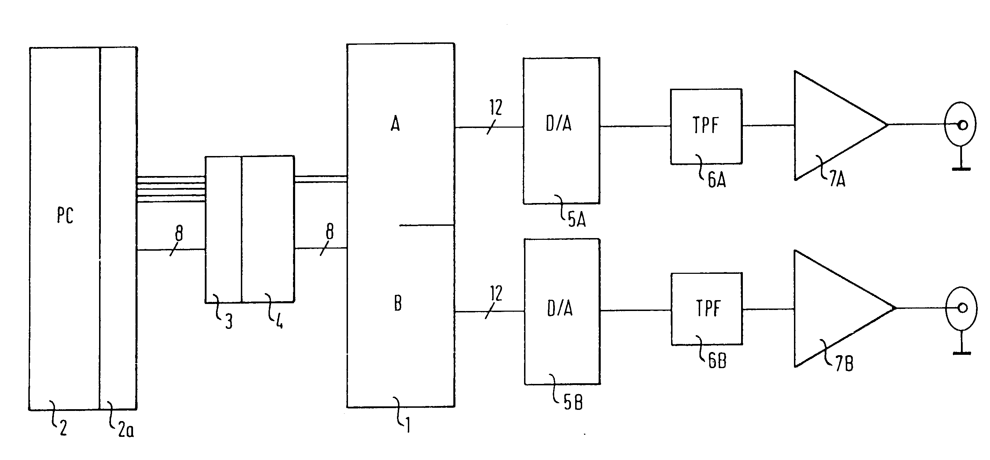

Im folgenden wird ein Ausführungsbeispiel der Erfindung anhand der Zeichnung näher erläutert.

Bei der in der Zeichnung dargestellten Ausführungsform wird ein Zweikanal-Direct-Digital-Synthesizer DDS 1 (Firma Qualcomm Modell DDS Q 2334, 2 Kanäle, 32-bit-Phaseninkrementregister) mit den Kanälen A und B von einem PC 2 über dessen Centronics-Druckerschnittstelle 2a angesteuert. Anstelle der Druckerschnittstelle 2a kann auch eine andere parallele Schnittstelle des PC 2 verwendet werden. Durch den PC 2 werden 8 Bits parallel über die Schnittstelle 2a in doppelt gepufferte Eingaberegister des DDS 1 geladen. Die Berechnung der für Frequenz und Phase erforderlichen Größen und ihre Übertragung erfolgt durch den PC 2. Als PC 2 kann ein IBM-kompatibler PC verwendet werden (XT, AT oder neuere Systeme). Anstelle eines PC kann aber auch eine Großrechenanlage eingesetzt werden. Der DDS 1 kann im Prinzip beliebig viele Kanäle enthalten. Jeder Kanal enthält ein Phaseninkrementregister (nicht gezeigt), in dem die Phaseninkremente zur Erzeugung der gewünschten Frequenz gespeichert werden. Der PC 2 sendet Informationsbits über ein Hardwareprotokoll 4 an den DDS 1. Das Hardwareprotokoll 4 simuliert nicht nur die für den Handshake-Betrieb erforderlichen Signale, sondern enthält darüberhinaus einen Wechselschalter oder Multiplexer, der dafür sorgt, daß vom PC 2 gesendete Informationsbits im DDS 1 abwechselnd als Adressenbits oder Datenbits wirksam werden. Vorteilhaft werden Optokoppler 3 zur galvanischen Trennung von PC 2 und DDS 1 zwischen die Schnittstelle 2a und das Hardware-protokoll 4 eingesetzt, um Erdungsprobleme zu vermeiden. Die Kanäle A und B des DDS 1 sind ausgangsseitig jeweils mit Digital/Analog-Wandlern 5A bzw. 5B und nachgeschalteten Tiefpaßfiltern 6A bzw. 6B zur Erzeugung von analogen Ausgangssignalen verbunden. Durch Ausgangsverstärker 7A und 7B kann die Amplitude der Ausgangssignale im Frequenzbereich von z.B. D bis 13 MHz eingstellt und konstant gehalten werden.

Auf diese Weise wird ein sehr kompaktes bedienungs-freundliches Gerät geschaffen, das über ein normales Druckerkabel von jedem PC angesteuert werden kann. Die Integration der Ansteuerung des DDS in automatisierte Meßverfahren ist so leicht möglich.

Die Auslösung der Frequenzänderungen erfolgt durch den PC über die parallele Schnittstelle entweder automatisch durch ein auf dem PC ablaufendes Programm oder durch manuelle Eingabe.

Die in das Phaseninkrementregister geladenen Datenbits werden dabei durch bestimmte Verfahrensschritte erzeugt, mit denen eine permanente Addition bzw. Subtraktion von Phaseninkrementwerten zu bzw. von dem im Register gespeicherten Phasenwert erfolgen kann, ohne daß eine Kontrolle für Registerüberlauf durchgeführt werden muß. Das Phaseninkrementregister habe eine Bitbreite n und einen Phasenwert P mit der Bitlänge n gespeichert. Ein Phaseninkrementwert Q mit der Bitlänge n soll addiert bzw. subtrahiert werden. Die Verfahrensschritte bewirken das Folgende:

$$P + Q = \begin{cases} (P+Q) & \text{wenn } P \leq {}^*Q \\ (P-{}^*Q-1) & \text{wenn } P > {}^*Q \end{cases}$$

$$P - Q = \begin{cases} (P-Q) & \text{wenn } P \geq Q \\ (P+{}^*Q+1) & \text{wenn } P < Q, \end{cases}$$

wobei *Q ein zu Q komplementärea Bitwort (unary onescomplement) ist.

Auf der Benutzerebene des PC können verschiedene Betriebsarten (Menüs) ausgewählt werden.

In einer ersten Betriebsart können in beiden Kanälen feste oder sich stetig ändernde Frequenzen (Scanning) erzeugt werden.

Zusätzlich kann im Kanal B zwischen zwei Ausgangsfrequenzen, die sich um eine vorgegebene Frequenz unterscheiden, hin und hergeschaltet werden. Die Umschaltfrequenz wird aus der Frequenz im Kanal A abgeleitet. Dies kann entweder dadurch geschehen, daß die Umschaltung im Kanal B durch ein Rechtecksignal im Kanal A oder durch ein ausgewähltes Bit des Signals im Kanal A auf der digitalen Ebene gesteuert wird. Die Umschaltung im Kanal B kann phasenkontinuierlich erfolgen.

In einer zweiten Betriebsart können Eingaben für die Kontrolle der Phasen analog zu den Eingaben für die Frequenzen im ersten Menü durchgeführt werden. Zusätzlich ist die Eingabe der Arbeitsfrequenz erforderlich. Beim Scanning der Phase beginnt der erste Zyklus mit dem in der Phasenanzeige angegebenen Phasenwert. Dabei kann wahlweise vor jedem neuen Inkrementierungscyclus der Phasenwert auf Null zurückgesetzt werden, d.h. jeder Zyklus beginnt bei der Phase 0.

Der Betrieb des Generators wird mit Funktionstasten des PC 2 aktiviert. Neben der Funktionstaste für den Scanningbetrieb gibt es auch eine Schrittfunktion für Einzelschritte, wobei bei Betätigung jeweils nur eine Inkrementierung erfolgt.

**Patentansprüche**

1. Verfahren zum Betrieb eines Direct-Digital-Synthesizers (1), der einen oder mehrere Kanäle (A, B, ...) mit jeweils einem Phaseninkrementregister enthält und von einer Rechenanlage (2) angesteuert werden kann, indem die Rechenanlage (2) Informationsbits an den DDS (1) sendet, **dadurch gekennzeichnet**, daß jedes der Phaseninkrementregister eine Bitbreite n und im Betrieb zu jedem Zeitpunkt einen gespeicherten Phasenwert P mit der Bitlänge n aufweist, und daß die Addition eines Phaseninkrements Q mit der Bitlänge n nach folgender Regel erfolgt

$$P + Q = \begin{cases} (P+Q) & \text{wenn } P \leq {}^*Q \\ (P-{}^*Q-1) & \text{wenn } P > {}^*Q \end{cases}$$

und daß die Subtraktion eines Phaseninkrements Q mit der Bitlänge n nach folgender Regel erfolgt

$$P - Q = \begin{cases} (P-Q) & \text{wenn } P \geq Q \\ (P+{}^*Q+1) & \text{wenn } P < Q, \end{cases}$$

wobei *Q das Unary-1-Komplement von Q ist.

2. Verfahren nach Anspruch 1, **dadurch gekennzeichnet**, daß in einer Betriebsart in einem ersten Kanal eine sich stetig ändernde Ausgangsfrequenz erzeugt wird, und daß in einem zweiten Kanal mit einer Umschaltfrequenz zwischen zwei Ausgangsfrequenzen, die sich um eine Differenzfrequenz unterscheiden, hin- und hergeschaltet wird, und daß die Umschaltfrequenz im zweiten Kanal aus der Ausgangsfrequenz im ersten Kanal abgeleitet wird, wobei die Umschaltung im zweiten Kanal entweder durch ein Rechtecksignal im ersten Kanal oder durch ein ausgewähltes Bit des Signals im ersten Kanal auf der digitalen Ebene gesteuert wird.

3. Verfahren nach Anspruch 2, **dadurch gekennzeichnet**, daß die Umschaltung im zweiten Kanal phasenkontinuierlich erfolgt.

4. Verfahren nach Anspruch 1, **dadurch gekennzeichnet**, daß die Steuerung des DDS (1) durch manuelle Eingabe an der Rechenanlage (2) erfolgt oder in ein auf der Rechenanlage (2) ablaufendes Meßprogramm direkt integriert ist.

5. Einrichtung zum Betrieb eines Direct-Digital-Synthesizers (1), der einem oder mehrere Kanäle (A, B...) mit jeweils einem Phaseninkrement-Register mit einer Bitbreite n enthält, mit einer steuernden Rechenanlage (2), die Informationsbits and den Eingang des Direct-Digital-synthesizers (1) sendet, **gekennzeichnet durch** eine Ablaufsteuerung zur Durchführung der folgenden Phaseninkrementsteueroperationen:
   Addition eines Phaseninkrements Q mit der Bitlänge n zu einem gespeicherten Phasenwert P mit der Bitlänge n:

$$P + Q = \begin{cases} (P+Q) & \text{wenn } P \leq {}^*Q \\ (P-{}^*Q-1) & \text{wenn } P > {}^*Q \end{cases}$$

   Subtraktion eines Phaseninkrements Q mit der Bitlänge n

$$P - Q = \begin{cases} (P-Q) & \text{wenn } P \geq Q \\ (P+{*}Q+1) & \text{wenn } P < Q, \end{cases}$$

wobei *Q das Unary-1-Komplement von Q ist.

6. Einrichtung nach Anspruch 5, **dadurch gekennzeichnet**, daß die Rechenanlage (2) eine Standard-Druckerschnittstelle (2a) oder eine andere parallele Schnittstelle aufweist, über die die Informationsbits gesendet werden können.

7. Einrichtung nach Anspruch 5, **dadurch gekennzeichnet**, daß daß die von der Rechenanlage (2) gesendeten Informationsbits entweder Adressenbits oder Datenbits sind und daß die Rechenanlage (2) mit dem Eingang eines Multiplexers verbunden ist, dessen Ausgang mit dem Eingang des DDS (1) verbunden ist, und daß der Multiplexer dafür sorgt, daß die von der Rechenanlage gesendeten Informationsbits entweder als Adressenbits oder als Datenbits im DDS (1) wirksam werden.

8. Einrichtung nach Anspruch 7, **dadurch gekennzeichnet**, daß die Rechenanlage (2) mit einem Hardware-Protokoll (4) verbunden ist, und daß der Ausgang des Hardware-Protokolls mit dem Eingang des DDS (1) verbunden ist und daß der Multiplexer in dem Hardware-Protokoll enthalten ist.

## Claims

1. Method for the operation of a direct digital synthesiser (1) which contains one or several channels (A, B, ...) each with a phase increment register and can be controlled by a computer in that the computer (2) transmits information bits to the DDS (1), characterised in that each of the phase increment registers comprises a bit width n and in operation at each point in time a stored phase value P with the bit length n, and that the addition of a phase increment Q with the bit length n takes place according to the following rule:

$$P + Q = \begin{cases} (P+Q) & \text{when } P \leq {*}Q \\ (P-{*}Q-1) & \text{when } P > {*}Q \end{cases}$$

and that the subtraction of a phase increment Q with the bit length n takes place according to the following rule:

$$P - Q = \begin{cases} (P-Q) & \text{when } P \geq Q \\ (P+{*}Q+1) & \text{when } P < Q, \end{cases}$$

wherein *Q is the unary-1 complement of Q.

2. Method according to claim 1, characterised in that in a mode of operation in a first channel a constantly changing output frequency is generated, and that in a second channel there is switching back and forth with a switchover frequency between two output frequencies, which differ by a difference frequency, and that the switchover frequency in the second channel is derived from the output frequency in the first channel, wherein the switching over in the second channel is controlled on the digital level either by a square-wave signal in the first channel or by a selected bit of the signal in the first channel.

3. Method according to claim 2, characterised in that the switching over in the second channel takes place in phase-continuous manner.

4. Method according to claim 1, characterised in that the control of the DDS (1) takes place by means of manual input to the computer (2) or is directly integrated in a measuring program running on the computer (2).

5. Device for the operation of a direct digital synthesiser (1) which contains one or several channels (A, B ...) each with a phase increment register with a bit width n, with a controlling computer (2), which transmits information bits to the input of the direct digital synthesiser (1), characterised by an operating control for carrying out the following phase increment control operations:

Addition of a phase increment Q with the bit length n to a stored phase value P with the bit length n:

$$
P + Q = \begin{cases} (P+Q) & \text{when } P \leq {}^*Q \\ (P-{}^*Q-1) & \text{when } P > {}^*Q \end{cases}
$$

Subtraction of a phase increment Q with the bit length n:

$$
P - Q = \begin{cases} (P-Q) & \text{when } P \geq Q \\ (P+{}^*Q+1) & \text{when } P < Q, \end{cases}
$$

wherein *Q is the unary-1 complement of Q.

6. Device according to claim 5, characterised in that the computer (2) comprises a standard printer interface (2a) or another parallel interface through which the information bits can be transmitted.

7. Device according to claim 5, characterised in that the information bits transmitted by -the computer (2) are either address bits or data bits and that the computer (2) is connected to the input of a multiplexer, the output of which is connected to the input of the DDS (1), and that the multiplexer ensures that the information bits transmitted by the computer become effective in the DDS (1) either as address bits or as data bits.

8. Device according to claim 7, characterised in that the computer (2) is connected to a hardware log (4) and that the output of the hardware log is connected to the input of the DDS (1) and that the multiplexer is contained in the hardware log.

## Revendications

1. Procédé de fonctionnement d'un synthétiseur numérique direct (DDS) (1), contenant un ou plusieurs canaux (A,B, ...) ayant chacun un registre à incrémentation de phase et pouvant être commandé par un ordinateur (2), dans lequel l'ordinateur (2) envoie des bits d'information au DDS (1) caractérisé en ce que chacun des registres à incrémentation de phase a une largeur de bit (n) et, en fonctionnement, présente à chaque instant une valeur de phase P mémorisée ayant une largeur de bit n et en ce que l'addition d'un incrément de phase Q avec la largeur de bit (n) s'effectue selon les règles ci-après:

$$
P + Q = \begin{cases} (P+Q) & \text{lorsque } P \leq {}^{\sim}Q \\ (P-{}^*Q-1) & \text{lorsque } P > {}^{\sim}Q \end{cases}
$$

et en ce que la soustraction d'un incrément de phase Q ayant la largeur de bit n s'effectue selon les règles ci-après:

$$
P - Q = \begin{cases} (P-Q) & \text{lorsque } P \geq Q \\ (P+{}^{\sim}Q+1) & \text{lorsque } P < Q, \end{cases}
$$

dans lesquels $^*$Q est le complément à 1 monadique de Q.

**2.** Procédé selon la revendication 1, caractérisé en ce que, dans un type de fonctionnement, il est produit dans un premier canal une fréquence de sortie variant de façon permanente et en ce que, dans un deuxième canal, on effectue une commutation dans les deux sens, avec une fréquence de commutation, entre deux fréquences de sortie se distinguant par le fait qu'elles présentent une différence de fréquence, et en ce que la fréquence de commutation dans le deuxième canal est dérivée de la fréquence de sortie dans le premier canal, la commutation dans le deuxième canal étant commandée sur le plan numérique, soit par un signal rectangulaire passant dans le premier canal, soit par un bit sélectionné du signal passant dans le premier canal.

**3.** Procédé selon la revendication 2, caractérisé en ce que la commutation dans le deuxième canal s'effectue avec une continuité de phase.

**4.** Procédé selon la revendication 1, caractérisé en ce que la commande du DDS (1) s'effectue par introduction manuelle dans l'ordinateur (2) ou bien est directement intégrée dans un programme de mesure se déroulant dans l'ordinateur (2).

**5.** Dispositif prévu pour le fonctionnement d'un synthétiseur numérique direct (1), contenant un ou plusieurs canaux (A,B ...) ayant chacun un registre à incrément de phase de largeur de bit n, avec un ordinateur (2) assurant la commande, envoyant des bits d'information à l'entrée du synthétiseur numérique direct (1), caractérisé par une commande de déroulement pour mettre en oeuvre les opérations de commande à incrémentation de phase ci-après:
Addition d'un incrément de phase Q de largeur de bit n à une valeur de phase P mémorisée et ayant une largeur de bit n:

$$P \ + \ Q \ = \begin{cases} (P+Q) & \text{lorsque } P \leq {}^\sim Q \\ \\ (P-{}^*Q-1) & \text{lorsque } P > {}^\sim Q \end{cases}$$

Soustraction d'un incrément de phase Q de largeur de bit n

$$P \ - \ Q \ = \begin{cases} (P-Q) & \text{lorsque } P \geq Q \\ \\ (P+{}^\sim Q+1) & \text{lorsque } P < Q, \end{cases}$$

${}^*Q$ étant le complément à 1 monadique de Q.

**6.** Dispositif selon la revendication 5, caractérisé en ce que l'ordinateur (2) présente une interface standard (2a) pour imprimante ou une autre interface parallèle, par l'intermédiaire de laquelle les bits d'information peuvent être envoyés.

**7.** Dispositif selon la revendication 5, caractérisé en ce que les bits d'information envoyés par l'ordinateur (2) sont soit des bits d'adresse soit des bits de données, et en ce que l'ordinateur (2) est relié à l'entrée d'un multiplexeur dont la sortie est reliée à l'entrée du DDS (1), et en ce que le multiplexeur veille à ce que les bits d'information envoyés par l'ordinateur soient actifs dans le DDS (1), soit comme bit d'adresse, soit comme bit de données.

**8.** Dispositif selon la revendication 7, caractérisé en ce que l'ordinateur (2) est relié à une interface pour matériel informatique (4), et en ce que la sortie de l'interface pour matériel informatique est reliée à l'entrée du DDS (1) et en ce que le multiplexeur est contenu dans un l'interface pour matériel informatique.

PC  2  2a

3  4  8

A  B  1  8

D/A  5A  12

D/A  5B  12

TPF  6A

TPF  6B

7A

7B